# EUROPEAN PATENT APPLICATION

(11) **EP 1 553 431 A1**
(43) Date of publication of application: **13.07.2005**
(21) Application number: 03751412.2
(22) Date of filing: 09.10.2003
(51) Int. Cl.: G02B 5/08, F21V 7/00

(54) **OPTICAL REFLECTION PLATE AND METHOD OF PRODUCING THE SAME**

(30) Priority: 16.10.2002 JP 2002301828
(71) Applicant: The Furukawa Electric Co., Ltd., Tokyo 100-8322 (JP)
(72) Inventor: NOUSOU, Yoshiyuki, THE FURUKAWA ELECTRIC CO., LTD, Tokyo 100-8322 (JP); MORITA, Nobuyuki, THE FURUKAWA ELECTRIC CO., LTD, Tokyo 100-8322 (JP); NAGASHIMA, Kazuya, THE FURUKAWA ELECTRIC CO., LTD, Tokyo 100-8322 (JP); KEMMOTSU, Takaaki, THE FURUKAWA ELECTRIC CO., LTD, Tokyo 100-8322 (JP)
(74) Representative: Cooper, John
(86) International application number: PCT/JP2003/012956
(87) International publication number: WO 2004/036271

(57) **Abstract**

An object of the present invention is to provide a light reflector plate having the following advantages A to D: A. no need for high initial investment for dies or the like required for forming a three-dimensional shape; B. simple working and low cost of working; C. accurate shape retention of a reflector plate after bending work, and excellent dimensional stability even under severe conditions of use; and D. simple and low-cost attaching work for shape retention. To achieve the above object, according to the present invention, narrow cuts 4 are intermittently formed in a light-reflecting plastic foam film or sheet 2 along straight lines in such a manner as to penetrate from one side surface of the film or sheet 2 to the opposite side surface thereof. Subsequently the film or sheet is bent along the cuts.

## Description

### TECHNICAL FIELD

The present invention relates to a technique for forming a three-dimensional light reflector plate adapted to allow thickness reduction and enhancement of the brightness and efficiency of backlights and lighting boxes for use with illumination signboards, liquid crystal displays, lighting fixtures, and the like.

### BACKGROUND ART

Conventionally proposed light reflector plates for use with illumination signboards, liquid crystal displays, lighting fixtures, and the like include those fabricated as follows: a light-reflecting film having a thickness of about 200 µm is laminated on an aluminum or steel plate, and the resultant reflector plate material is formed into a three-dimensional shape to thereby yield a light reflector plate; and a reflector plate of resin is formed into a three-dimensional shape to thereby yield a light reflector plate (refer to, for example, Japanese Patent Application Laid-Open (*kokai*) No. 6-260010).

However, fabrication of the former light reflector plate-fabricated in a manner such that a light-reflecting film is laminated on an aluminum or steel plate, and the resultant reflector plate material is formed into a three-dimensional shape-involves a number of press dies and a number of working steps, resulting in high die cost, increased man-hours, and high cost of working. Fabrication of the latter light reflector plate-fabricated in a manner such that a reflector plate of resin is formed into a three-dimensional shape-involves thermal molding that uses a molding die or the like. However, this fabrication method involves poor working accuracy caused by, for example, shrinkage after thermal molding, as well as high molding die cost and cost of working.

### DISCLOSURE OF THE INVENTION

The present invention has been accomplished in view of the foregoing, and an object of the invention is to provide a light reflector plate including a bent light-reflecting film or sheet of resin and having the following advantages A to D:
A. no need for high initial investment in dies or the like required for forming a three-dimensional shape;
B. simple working and low cost of working;
C. accurate shape retention of a reflector plate after bending work, and excellent dimensional stability even under severe conditions of use; and
D. simple and low-cost attaching work for shape retention.

To achieve the above object, the present invention provides the following methods 1 to 5 for manufacturing a light reflector plate:
1. a method for manufacturing a light reflector plate characterized in that narrow cuts are intermittently formed in a light-reflecting plastic foam film or sheet along a straight line in such a manner as to penetrate from one side surface of the film or sheet to the opposite side surface thereof, and subsequently the film or sheet is bent along the cuts to thereby obtain a bent reflector plate;
2. a method for manufacturing a light reflector plate as described in 1, wherein the light-reflecting plastic foam film or sheet is a thermoplastic polyester or cyclopolyolefin film or sheet having therein a number of fine bubbles or pores having an average diameter not greater than 50 µm;
3. a method for manufacturing a light reflector plate as described in 1 or 2, wherein each of the narrow cuts has a width not greater than 3 mm and a length not longer than 10 mm, and an uncut portion located between two adjacent cuts has a length not shorter than 1 mm;
4. a method for manufacturing a light reflector plate as described in any one of 1 to 3, wherein, after a step of bending the light-reflecting plastic foam film or sheet along the cuts to thereby obtain a bent reflector plate, there is performed a step of inserting, into a hole or slit portion provided on the bent reflector plate, a claw-like standing portion having a width of 1 mm to 5 mm and a length of 3 mm to 20 mm and formed on an aluminum or steel plate having a thickness not greater than 1 mm, and bending the claw-like standing portion to thereby fixedly join together the bent reflector plate and the aluminum or steel plate; and
5. a method for manufacturing a light reflector plate as described in 4, wherein claw clamp portions formed through insertion of the claw-like standing portions into the corresponding holes or slit portions are arranged at a pitch not greater than 300 mm.

Also, the present invention provides a light reflector plate characterized by being manufactured by the method for manufacturing a light reflector plate as described above in any one of 1 to 5. Specifically, the light reflector plate of the present invention is a light reflector plate characterized by being fabricated by a method such that narrow cuts are intermittently formed in a light-reflecting plastic foam film or sheet along a straight line in such a manner as to penetrate from one side surface of the film or sheet to the opposite side surface thereof, and subsequently the film or sheet is bent along the cuts, as well as a light reflector plate fabricated such that the thus-obtained light reflector plate is fixed on an aluminum or steel plate by the method described above in 4.

As mentioned previously, conventionally, in order to form, into a three-dimensional shape, a reflector plate material including an aluminum or steel plate having a thickness of about 200 µm and a light-reflecting film laminated on the aluminum or steel plate, fabrication involves a number of press dies and a number of working steps. As a result, die cost is high, and the number of working man-hours is large, resulting in high cost of working. Also, in order to form a reflector plate of resin into a three-dimensional shape, a thermal molding method that uses a molding die or the like has been employed. However, this method involves poor working accuracy caused by, for example, shrinkage after thermal molding, as well as high molding die cost and cost of working.

By contrast, according to the present invention described above in 1 to 3, cuts are formed in a plastic foam film or sheet in the form of perforations in rows, whereby the film or sheet can be readily and accurately formed into a three-dimensional shape by bending it inward and outward along the cuts. Thus, the need to use expensive dies is eliminated, and bending work can be performed at low cost by use of simple jigs or the like. Also, according to the present invention described above in 4 and 5, the shape of a three-dimensional light reflector plate formed through the bending work can be retained practically, readily, and accurately.

### BRIEF DESCRIPTION OF DRAWINGS

FIG. 1 is a view showing an example of cuts formed in a sheet before bending, accompanied by an enlarged view of cuts.
FIG. 2 is a view showing an example of the shape of the sheet after bending.
FIG. 3 is a view illustrating the shape of a bent sheet and the position of fluorescent lamps by example.
FIG. 4 is a view showing an example state before attachment of a bent sheet article to an aluminum plate. FIG. 5 is a view showing an example state after attachment of the bent sheet article to the aluminum plate.
FIG. 6 is a view showing an example state in which the sheet is clamped by bending a standing claw of the aluminum plate.
FIG. 7 is a view showing an example of a formed aluminum article before attachment of a film thereto.
FIG. 8 is a view showing an example of cuts formed in a film before bending, accompanied by an enlarged view of cuts.
FIG. 9 is a view showing an example state in which the film is clamped by bending a standing claw of the formed aluminum plate.
FIG. 10 is a view showing an example state before attachment of a bent film article to the formed aluminum plate.
FIG. 11 is a view showing an example state after attachment of the bent film article to the formed aluminum plate.

### BEST MODE FOR CARRYING OUT THE INVENTION

The present invention will next be described in detail. According to the present invention, narrow cuts are formed in a light-reflecting plastic foam film or sheet in the form of perforations in straight rows in such a manner as to penetrate from one side surface of the film or sheet to the opposite side surface thereof, and subsequently the film or sheet is bent inward and outward along the cuts in the form of perforations in rows, whereby the planar film or sheet can be readily formed into a three-dimensional shape. Preferably, the film or sheet is a thermoplastic polyester or cyclopolyolefin film or sheet having therein a number of fine bubbles or pores having an average diameter not greater than 50 µm.

According to the present invention, preferably, each of the cuts to be formed in the plastic foam film or sheet has a width not greater than 3 mm and a length not longer than 10 mm, and an uncut portion located between two adjacent cuts has a length not shorter than 1 mm. In order to prevent the initiation of breakage of material from a cut portion at the time of bending the film or sheet along a line of cuts, an uncut portion located between intermittently arranged cuts preferably has a length not shorter than 1 mm. The length of a cut is determined on the basis of the following: use of a commercially available cutting tool that has cutting blades arranged intermittently at a pitch not greater than 10 mm so as to cut a row of perforations is inexpensive and practical.

In the case where, instead of the above-mentioned cuts, depressed ruled lines are formed straight on the surface of a film or sheet, and subsequently bending the film or sheet inward and outward along the lines is attempted, the bending work is hard to carry out, since a force required for bending is large, and the film or sheet is not necessarily bent along the ruled lines.

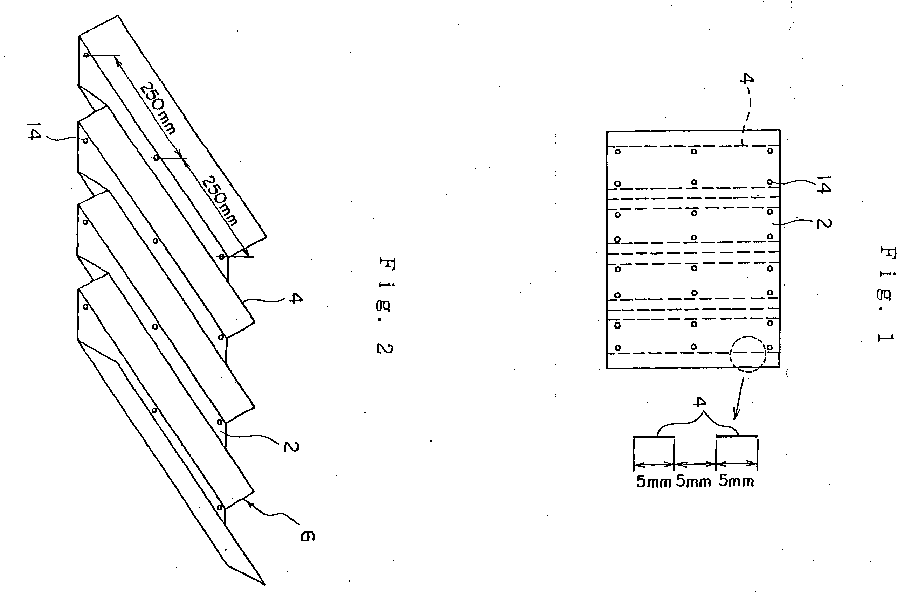

Also, use of an unfoamed plastic sheet or film involves the following problem: in the case of involving a large number of bending lines or a large area subjected to bending (e.g., the case shown in FIGS. 1 and 2, which will be described later), forming cut portions in the form of perforations in rows in a single operation of cutting may fail to provide uniform cutting over the entire surface of the sheet or film, since the sheet or film is hard. As a result, the sheet or film may not be properly bent along perforations. By contrast, a foamed body is soft and easy to cut, thus allowing easy formation of cuts therein even in the case of involving a large number of bending lines or a large area subjected to bending.

According to the present invention, after a step of bending the above-mentioned light-reflecting plastic foam film or sheet along the cuts to thereby obtain a bent reflector plate, there is performed a step of inserting, into a hole or slit portion provided on the bent reflector plate, a claw-like standing portion having a width of 1 mm to 5 mm and a length of 3 mm to 20 mm and formed on an aluminum or steel plate having a thickness not greater than 1 mm, and bending the claw-like standing portion to thereby fixedly join together the bent reflector plate and the aluminum or steel plate. That is, preferably, in order to retain the shape of a three-dimensionally bent film or sheet, a claw-like bend portion is provided on an aluminum or steel plate; after insertion of the claw into a corresponding hole or slit portion provided on the film or sheet, the claw is, for example, bent forward or backward to thereby attach the film or sheet to the aluminum or steel plate. In this case, preferably, in order to facilitate bending of the claw, the thickness of the aluminum or steel plate is not greater than 1 mm; the width of the claw is 1 mm to 5 mm, and the length of the claw is 3 mm to 20 mm; and the claw is formed through slit cutting because of easiness of machining.

Preferably, claw clamp portions formed through insertion of the claw-like standing portions into the corresponding holes or slit portions mentioned above are arranged at a pitch not greater than 300 mm. That is, by arranging the clamping claws in a planar direction at a pitch not greater than 300 mm, even when the completed reflector plate is put into actual used or tested at high temperature, at high humidity, or under thermal cycle conditions, the shape can be retained with a desired dimensional accuracy. The bent film or sheet can be attached to the aluminum or steel plate by means of pressure sensitive adhesive double coated tape. However, this method is disadvantageous in that positioning between the bent film or sheet and the metal plate to which the film or sheet is to be attached is difficult. Attachment by screws is also possible. However, when a number of fastening positions are involved, cost tends to increase, and thus the method becomes impractical.

Next, embodiments of the present invention will be described with reference to the accompanying drawings. However, the present invention is not limited thereto. A light-reflecting plastic foam sheet having a thickness of 1 mm and an internal bubble diameter not greater than 50 µm (e.g., MCPET (registered trademark) from The Furukawa Electric. Co., Ltd.) is commercially available and is formed as follows: an extruded sheet of thermoplastic polyester is impregnated with carbon dioxide gas under high pressure, and the resultant sheet is foamed through application of heat. Also commercially available is a light-reflecting plastic foam film formed from cyclopolyolefin and having a thickness of 0.5 mm and an internal bubble diameter not greater than 50 µm. The examples below are offered to illustrate a method for manufacturing, from the light-reflecting sheet and film and by use of the present invention, a three-dimensional light reflector plate to be placed behind fluorescent lamps that serve as light sources for backlight of a liquid crystal display unit.

### (Example 1)

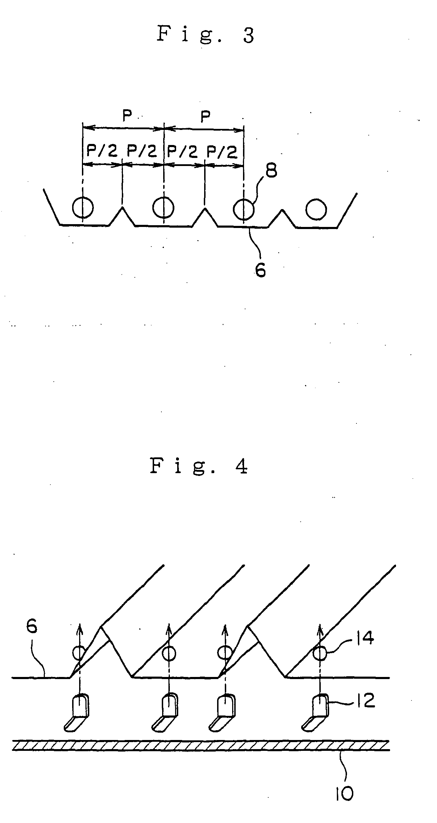

As shown in FIG. 1, cuts 4 were formed along straight lines in a polyethylene terephthalate foam sheet 2 formed through foaming fourfold and having an average bubble diameter not greater than 50 µm and a thickness of 1 mm by use of a band-blade-like punching blade having a thickness of 0.7 mm to 1.42 mm and adapted to punch in a sheet 5-mm-length perforations arranged straight at 5 mm intervals. Subsequently, as shown in FIG. 2, the foam sheet 2 was bent inward and outward along the cuts so as to form straightly extending angle portions, thereby obtaining a bent reflector plate 6. As shown in FIG. 3, the pitch of the angle portions to be formed through bending was designed to coincide with pitch p of fluorescent lamps 8 for backlight; specifically, such that the crest of an angle portion is located at a substantially middle position between the adjacent fluorescent lamps 8-at a position located p/2 away from either fluorescent lamp 8. A die was not used for bending. By use of a jig whose shape coincides with that of an angle portion, the angle portions were formed one by one through bending.

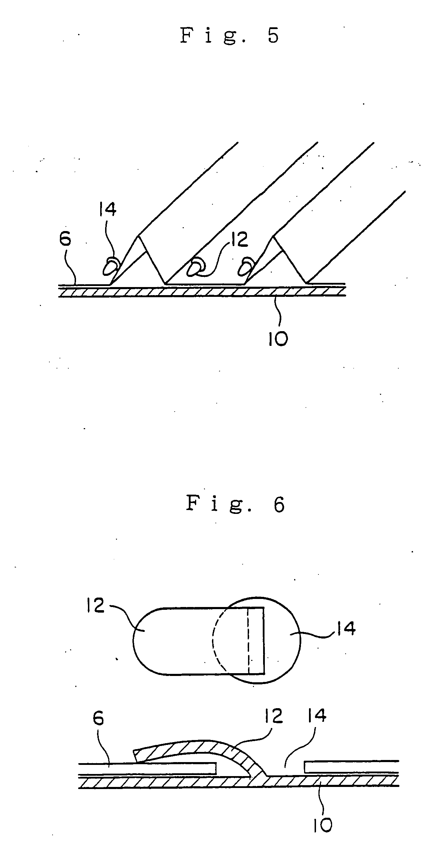

Next, as shown in FIG. 4, claw-like standing portions 12 each having a width of 2 mm and a length of 4 mm were formed on a planar aluminum plate 10 having a thickness of 0.8 mm in the vicinity of the foot of each angle portion so as to avoid contact with a fluorescent lamp at the time of application of vibration, and were arranged at a pitch of 250 mm in the longitudinal direction of the angle portions. In order to retain the shape of the bent reflector plate 6, after the claws 12 were inserted into corresponding round holes 14, which each have a diameter of 3 mm and had been formed beforehand in the reflector plate 6 at positions corresponding to the standing claws 12 of the aluminum plate 10, as shown in FIG. 5, the claws 12 were bent in such a manner as to clamp the reflector plate 6. Regarding the bending direction of the claws 12, bending the claws 12 in such a direction as to return it toward the original position; i.e., toward the plate side, as shown in FIG. 6 is preferred in order to reduce leakage of light at the time of fluorescent lamps being lit.

### (Example 2)

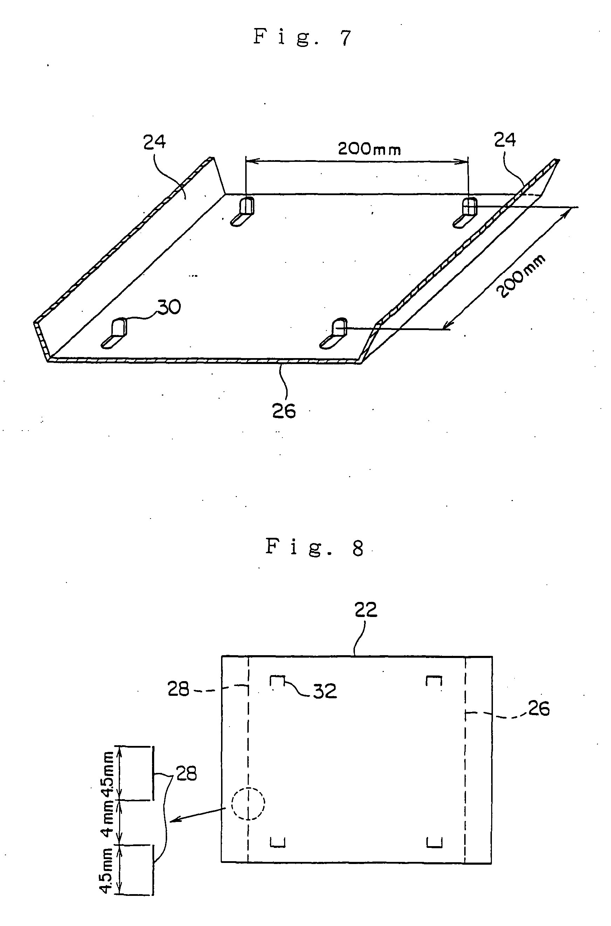

When, as shown in FIGS. 7 and 8, a cyclopolyolefin foam film 22 (FIG. 8) formed through foaming eightfold and having an average bubble diameter not greater than 50 µm and a thickness of 0.5 mm was to be attached onto a formed aluminum article 26 (FIG. 7) including standing opposite end portions 24 and having a thickness of 0.5 mm, in order to form bent portions on the film 22 at positions corresponding to the opposite end portions 24, relevant working was carried out. Specifically, by use of a band blade having a thickness of 0.7 mm to 0.9 mm and adapted to punch 4.5-mm-length perforations with 4-mm-uncut portions, cuts 28 were formed intermittently in the film 22 along straight lines.

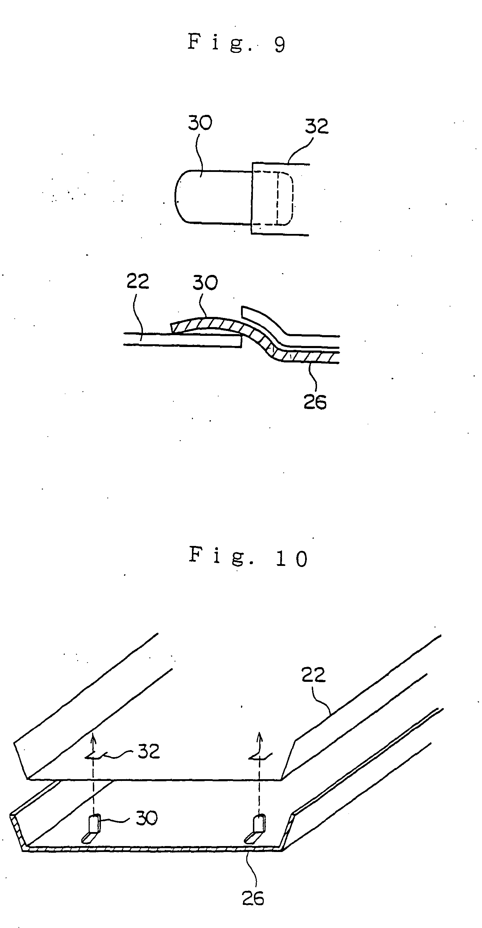

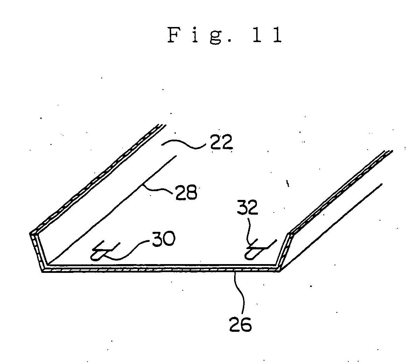

Subsequently, the film 22 was bent along perforation portions 28, which correspond to the standing portions 24 of the formed aluminum article 26. Claw-like standing portions 30 each having a width of 2 mm and a length of 4 mm were formed on the formed aluminum article 26 at a pitch of 200 mm at positions selected so as to avoid contact with a fluorescent lamp at the time of application of vibration. U-shaped slit portions 32 each having a side length of 3 mm as shown in FIG. 9 were formed on the film 22 at positions corresponding to the claws 30 of the formed aluminum article 26. As shown in FIG. 10, the claws 30 of the formed aluminum article 26 were inserted into the corresponding slit portions 32 of the bent film 22. As shown in FIG. 11, the claws 30 were bent in such a manner as to clamp the film 22, thereby attaching the film 22 to the formed aluminum article 26.

### INDUSTRIAL APPLICABILITY

The present invention yields the following effects:
a. conventionally, expensive dies have been required for forming a three-dimensional light reflector plate; however, according to the present invention, bending can be carried out by use of a simple jig, thereby eliminating need for high initial investment in dies and the like;
b. since working is simplified, the cost of working is reduced;
c. attachment of a bent reflector plate to an aluminum or steel plate by use of claw-like standing portions not only can retain the shape of a bent sheet or film with good accuracy but also can provide excellent dimensional stability even under severe conditions of use; and
d. attachment of a bent reflector plate to an aluminum or steel plate by use of claw-like standing portions simplifies the attaching work for shape retention, thereby reducing the cost of working for a light reflector plate.

## Claims

1. A method for manufacturing a light reflector plate **characterized in that** narrow cuts are intermittently formed in a light-reffecting plastic foam film or sheet along a straight line in such a manner as to penetrate from one side surface of the film or sheet to the opposite side surface thereof, and subsequently the film or sheet is bent along the cuts to thereby obtain a bent reflector plate.

2. A method for manufacturing a light reflector plate as described in claim 1, wherein the light-reflecting plastic foam film or sheet is a thermoplastic polyester or cyclopolyolefin film or sheet having therein a number of fine bubbles or pores having an average diameter not greater than 50 µm.

3. A method for manufacturing a light reflector plate as described in claim 1 or 2, wherein each of the narrow cuts has a width not greater than 3 mm and a length not longer than 10 mm, and an uncut portion located between two adjacent cuts has a length not shorter than 1 mm.

4. A method for manufacturing a light reflector plate as described in any one of claims 1 to 3, wherein, after a step of bending the light-reflecting plastic foam film or sheet along the cuts to thereby obtain a bent reflector plate, there is performed a step of inserting, into a hole or slit portion provided on the bent reflector plate, a claw-like standing portion having a width of 1 mm to 5 mm and a length of 3 mm to 20 mm and formed on an aluminum or steel plate having a thickness not greater than 1 mm, and bending the claw-like standing portion to thereby fixedly join together the bent reflector plate and the aluminum or steel plate.

5. A method for manufacturing a light reflector plate as described in claim 4, wherein claw clamp portions formed through insertion of the claw-like standing portions into the corresponding holes or slit portions are arranged at a pitch not greater than 300 mm.

6. A light reflector plate **characterized by** being manufactured by the method for manufacturing a light reflector plate as described in any one of claims 1 to 5.
